# EUROPÄISCHE PATENTSCHRIFT

(11) **EP 1 158 274 B1**
(45) Veröffentlichungstag und Bekanntmachung des Hinweises auf die Patenterteilung: **18.02.2009**
(21) Anmeldenummer: 00110732.5
(22) Anmeldetag: 19.05.2000
(51) Int. Cl.: G01D 3/08, G05F 1/565

(54) **Gesteuerte Stromquellen von Zwei-Leiter-Messgeräten**
Controlled current sources of two-wire measuring apparatuses
Sources de courant controllées pour mesureurs bifilaires

(43) Veröffentlichungstag der Anmeldung: 28.11.2001
(73) Patentinhaber: Endress + Hauser Flowtec AG, 4153 Reinach BL 1 (CH)
(72) Erfinder: Munck, Bertrand, 79541 Lörrach (DE)
(74) Vertreter: Hahn, Christian

(56) Entgegenhaltungen:
- EP-A- 0 062 531
- EP-A- 0 310 279
- EP-A- 0 883 097
- EP-A- 0 901 014
- WO-A1-00/26739
- WO-A1-89/03619
- WO-A1-95/08758
- WO-A1-96/41135
- DE-C- 19 636 838
- DE-C- 19 818 315
- GB-A- 2 035 626
- US-A- 5 446 380

## Beschreibung

Die Erfindung betrifft gesteuerte Stromquellen von Zwei-Leiter-Messgeräten, die als Messsignal einen zwischen 4 mA und 20 mA liegenden Ausgangsstrom erzeugen und die von einem mittels eines physikalisch-elektrischen Sensorelements erzeugten Steuersignal gesteuert sind.

Mit industriellen Messgeräten, wie sie hier vorausgesetzt werden, wird mindestens eine physikalische Größe gemessen, z.B. der Volumen- oder der Massedurchfluss eines Fluids, ferner dessen Dichte, Viskosität, Druck, oder Temperatur, ferner die Druckdifferenz zwischen zwei Medien oder aber auch ganz allgemein Temperatur, Druck, Füllstand, pH-Wert oder Gaskonzentration.

Diesen Messgeräten ist gemeinsam, dass mittels eines physikalisch-elektrischen Sensorelements ein Sensorsignal erzeugt wird, das mittels einer Auswerte-Elektronik in ein zur Übertragung und Weiterverarbeitung geeignetes Messsignal umgeformt wird.

Meistens sind derartige Messgeräte als Vier-Leiter-Geräte konzipiert. Dabei dienen einerseits zwei der vier Leiter der Energiespeisung des Messgeräts und andererseits die restlichen zwei Leiter der Übertragung des erwähnten Messsignals.

Weniger häufig werden auch Zwei-Leiter-Messgeräte eingesetzt, bei denen diese beiden Leiter sowohl für die Energiespeisung, wozu an die zwei Leiter von außen eine Gleichspannungsquelle anzulegen ist, als auch für die Übertragung des Messsignals benutzt werden müssen.

Ein marktgängiges Zwei-Leiter-Messgerät weist üblicherweise eine gesteuerte Stromquelle auf, die als Messsignal einen Ausgangsstrom erzeugt und die von einem mittels eines physikalisch-elektrischen Sensorelements erzeugten Steuersignals gesteuert ist. Beispiele für ein derartiges Zwei-Leiter-Messgerät sind u.a. in der EP-A 62531, der EP-A 883097, der WO-A 00/026739, der WO-A 96/41135, der WO-A 89/03619, der WO-A 95/08758 beschrieben.

Das vom Zwei-Leiter-Messgerät abgegebene Messsignal ist praktisch immer ein zwischen 4 mA und 20 mA liegender Ausgangsstrom, wobei ein bestimmter Stromwert innerhalb dieses Strombereichs genau einem Messsignalwert entspricht. Der Strombereich unterhalb von 4 mA steht für die Energieversorgung der auch hier vorhandenen Auswerte-Elektronik zur Verfügung.

Zwei-Leiter-Messgeräte brauchen daher mit wesentlich weniger Speise-Energie als die genannten Vier-Leiter-Geräte versorgt zu werden; dabei setzt sich die Speise-Energie aus der erwähnten Versorgungsenergie der Auswerte-Elektronik und der jedem Stromwert entsprechenden Energie zusammen.

Beispiele für Zwei-Leiter-Messgeräte der vorgenannten Art sind u.a. in der EP-A 62531, der EP-A 883097, der WO-A 00/026739, der WO-A 96/41135, der WO-A 89/03619, der WO-A 95108758 beschrieben. Das in der WO-A 00/26739 vorgeschlagene Zwei-Leiter-Messgerät weist dabei eine gesteuerte Stromquelle auf, die als Meßsignal einen zwischen 4 mA und 20 mA liegenden Ausgangsstrom erzeugt und die von einem mittels eines physikalisch-elektrischen Sensorelements erzeugten Steuersignals gesteuert ist,
- mit einem ersten Strompfad, der von einem ersten Anschluß einer von außerhalb anzuschaltenden Gleichspannungsquelle über eine Diode, eine Emitter-Kollektor-Strecke eines ersten Transistors, einen an einem zum Zwei-Leiter-Meßgerät gehörenden Schaltungsnullpunkt liegenden Spannungsregler und einen Strom-Meßwiderstand zu einem zweiten Anschluß der Gleichspannungsquelle führt,
- mit einem zweiten Strompfad, der vom ersten Anschluß über die Diode, den ersten Transistors, einen ersten Widerstand, einen zweiten Transistors und einen zweiten Widerstand zum zweiten Anschluß führt, wobei der im ersten Strompfad fließende Strom der im zweiten Strompfad fließende Strom sich zum Ausgangsstrom addieren, und
- mit einem Rückkopplungspfad für den Ausgangsstrom, der vom zweiten Anschluß über einen Rückkopplungswiderstand zu einem nichtinvertierenden Eingang eines Operationsverstärkers führt, welchem Eingang auch das Steuersignal zugeführt ist, und
- wobei ein Ausgang des Operationsverstärkers mit der Steuerelektrode des zweiten Transistors verbunden ist, wobei der erste und der zweite Transistor nach Einschalten der Gleichspannungsquelle leitend gesteuert sind.

Zwei-Leiter-Messgeräte eignen sich besonders für den Einsatz in explosionsgefährdeter Umgebung. Eine Schwierigkeit ist aber, dass beim Einschalten der Zwei-Leiter-Messgeräte die geringe Versorgungsenergie zwar für die Auswerte-Elektronik, nicht aber für den Start der gesteuerten stromquelle ausreicht.

Bei Zwei-Leiter-Messgeräten ist es ferner nachteilig, dass die Versorgungsenergie der Auswerte-Elektronik mit dem Messsignal, z.B. im Falle der Durchflussmessung also mit dem Durchfluss, schwankt. Daher ist eine konstante, vom Messsignal, z.B. dem Durchfluss, unabhängige Energieversorgung der Auswerte-Elektronik anzustreben.

Es ist daher eine Aufgabe der Erfindung, verbesserte gesteuerte Stromquellen von Zwei-Leiter-Messgeräten anzugeben, wobei der für den Start beim Einschalten der Gleichspannungsquelle benötigte, gegenüber dem Normalbetrieb höhere Energiebedarf zur Verfügung gestellt wird, so dass die gesteuerte Stromquelle automatisch zu arbeiten beginnt.

Ferner soll die Speise-Energie der Auswerte-Elektronik konstant, d.h. unabhängig vom Messwert, sein. Außerdem soll auch eine Stromquelle angegeben werden, die, außer dass sie die genannten Aufgaben löst, auch so ausgelegt sein, dass das sogenannten HART-Protokoll über die zwei Leiter übertragen werden kann (HART ist eine eingetragene Marke der HART User Group).

Zur Lösung dieser Aufgaben besteht die Erfindung in einer gesteuerten Stromquelle eines Zwei-Leiter-Messgeräts, die als Messsignal einen zwischen 4 mA und 20 mA liegenden Ausgangsstrom erzeugt und die von einem mittels eines physikalisch-elektrischen Sensorelements erzeugten Steuersignal gesteuert ist, mit
- einem ersten Strompfad,
   -- der von einem ersten Anschluss einer von außerhalb anzuschaltenden Gleichspannungsquelle über eine Diod eine Emitter-Kollektor-Strecke eines ersten Bipolar-Transistors, einen an einem zum Zwei-Leiter-Messgerät gehörenden Schaltungsnullpunkt liegenden Spannungsregler und einen am Schaltungsnullpunkt liegenden Strom-Messwiderstand zu einem zweiten Anschluss der Gleichspannungsquelle führt,
- mit einem zweiten Strompfad,
   -- der vom ersten Anschluss über die Diode, die Emitter-Basis-Strecke des ersten Bipolar-Transistors, einen ersten Widerstand, eine Kollektor-Emitter-Strecke eines zweiten Bipolar-Transistors, dessen Leitungstyp zum Leitungstyp des ersten Bipolar-Transistors komplementär ist, einen zweiten Widerstand und den Strom-Messwiderstand zum zweiten Anschluss führt,
   -- wobei der im ersten Strompfad fließende Strom und der im zweiten Strompfad fließende Strom sich zum Ausgangsstrom addieren,
- mit einem Rückkopplungspfad für den Ausgangsstrom,
   -- der vom zweiten Anschluss über einen Rückkopplungswiderstand zu einem nicht-invertierenden Eingang eines Operationsverstärkers führt,
      --- welchem Eingang auch das Steuersignal zugeführt ist und
      --- wobei ein Ausgang des Operationsverstärkers mit der Basis des zweiten Bipolar-Transistors verbunden ist,
- mit einem nach Einschalten der Gleichspannungsquelle den ersten Bipolar-Transistor leitend steuernden ersten Transistor,
   -- dem an einer Steuerelektrode durch das Einschalten ein Startsignal zugeführt wird, und
- mit einem nach Ablauf der Startphase den ersten Transistor nicht-leitend steuernden zweiten Transistor,
   -- dem an einer Steuerelektrode nach Ablauf der Startphase ein Stoppsignal zugeführt wird.

Nach einer ersten bevorzugten Ausgestaltung der Erfindung ist der erste Bipolar-Transistor ein pnp-Transistor und der zweite Bipolar-Transistor ein npn-Transistor.

Nach einer zweiten bevorzugten Ausgestaltung der Erfindung, welche Ausgestaltung zusammen mit deren erster Ausgestaltung anwendbar ist, sind
- der erste und der zweite Transistor N-Kanal-Enhancement-Insulated-Gate-Field-Effect-Transistoren mit jeweils einem Drain-, einem Source- und einem Gate-Anschluss,
- der Gate-Anschluss des ersten Transistors über einen zu einem dritten Widerstand in Serie liegenden vierten Widerstand mit der Basis des ersten Bipolar-Transistors verbunden,
- der Drain-Anschluss des ersten Transistors über einen zum vierten Widerstand in Serie liegenden fünften Widerstand mit der Basis des ersten Bipolar-Transistors verbunden,
- der Source-Anschluss des ersten Transistors mit dem Schaltungsnullpunkt verbunden,
- der Drain-Anschluss des zweiten Transistors mit dem Gate-Anschluss des ersten Transistor verbunden,
- der Source-Anschluss des zweiten Transistors mit dem Schaltungsnullpunkt verbunden und
- der Gate-Anschluss des zweiten Transistors mit einem das Steuersignal abgebenden Ausgang eines Mikroprozessors verbunden.

Nach einer dritten bevorzugten Ausgestaltung der Erfindung, welche Ausgestaltung zusammen mit deren zweiter und/oder dritter Ausgestaltung anwendbar ist, ist das dem Operationsverstärker zugeführte Steuersignal ein pulsbreitenmoduliertes Signal, das von einem Mikroprozessor aus dem Sensorsignal erzeugt und das geglättet wird.

Nach einer vierten bevorzugten Ausgestaltung der Erfindung, die zusammen mit mindestens einer von deren erster bis dritter Ausgestaltungen anwendbar ist, sind
- mit dem nicht-invertierenden Eingang des Operationsverstärkers ein Ausgang einer HART-Protokoll-Sendestufe kapazitiv gekoppelt, mit der dem Gesamtstrom ein nach außerhalb des Zwei-Leiter-Messgeräts zu sendendes erstes HART-Protokoll-Signal aufmoduliert wird,
- mit dem Emitter des ersten Bipolar-Transistors ein Eingang einer HART-Protokoll-Empfangsstufe kapazitiv gekoppelt, mit der ein dem Gesamtstrom außerhalb des Zwei-Leiter-Messgeräts aufmoduliertes, von diesem zu empfangendes HART-Protokoll-Signal demoduliert wird, und
- der Kollektor des ersten Bipolar-Transistors mit einem ersten Anschluss eines Kondensators gekoppelt, dessen zweiter Anschluss am Schaltungsnullpunkt liegt.

Nach einer bevorzugten Weiterbildung der Erfindung ist zwischen dem Kollektor des ersten Bipolar-Transistors und dem Spannungsregler eine zweite Diode eingefügt.

Die Erfindung und deren Vorteile werden nun anhand der Figuren der Zeichnung näher erläutert, in der Ausführungsbeispiele dargestellt sind. Funktionsgleiche Teile sind in unterschiedlichen Figuren mit denselben Bezugszeichen versehen.
- Fig. 1: zeigt teilweise in der Form eines Blockschaltbilds die Schaltung einer gesteuerten Stromquelle eines Zwei-Leiter-Messgeräts zum Zwecke der Veranschaulichung von mit dem Aufstarten solcher Stromquellen einhergehenden Problemstellungen, und
- Fig. 2: zeigt teilweise in der Form eines Blockschaltbilds die Schaltung einer gesteuerten Stromquelle eines Zwei-Leiter-Messgeräts entsprechend der Erfindung.

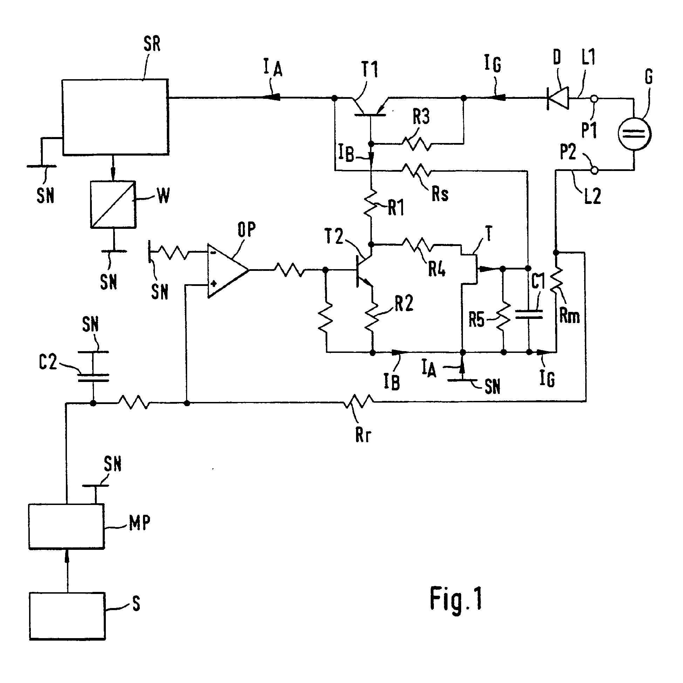

In Fig. 1 ist - lediglich zum Zwecke der Veranschaulichung von mit dem Aufstarten von Stromquellen der in Rede stehenden Art einhergehenden Problemstellungen - teilweise in der Form eines Blockschaltbilds die Schaltung einer gesteuerten Stromquelle nach einer Variante dargestellt, die bei allfälliger Übertragung des HART-Protokolls gewisse Nachteile aufweist. Die gesteuerte Stromquelle ist Teil eines Zwei-Leiter-Meßgeräts, das zur elektrischen Verbindung nach außen lediglich einen ersten Leiter L1 und einen zweiten Leiter L2 aufweist.

Der Leiter L1 führt zu einem ersten Anschluss P1 und der Leiter L2 zu einem zweiten Anschluss P2. Zur Energie-Speisung des Zwei-Leiter-Messgeräts ist mit den Anschlüssen P1, P2 eine Gleichspannungsquelle G verbindbar; wie üblich ist also die Gleichspannungsquelle G als ein- und ausschaltbar gedacht und hat z. B. eine Leerlaufspannung von 12 V bis 30 V.

Ein erster Strompfad führt vom ersten Anschluss P1 aus über eine Diode D, eine Emitter-Kollektor-Strecke eines ersten Bipolar-Transistors T1, einen an einem zum Zwei-Leiter-Messgerät gehörenden Schaltungsnullpunkt SN liegenden Spannungsregler SR und einen am Schaltungsnullpunkt SN liegenden Strom-Messwiderstand Rm zum zweiten Anschluss P2. Der erste Strompfad ist, wenn die Gleichspannungsquelle G mit den Anschlüssen P1, P2 und somit mit den Leitern L1, L2 verbunden ist, geschlossen und es fließt dann im ersten Strompfad ein Strom I_{A}.

In Fig. 1 ist der Bipolar-Transistor T1 ein pnp-Transistor und der Bipolar-Transistor T2 ein npn-Transistor, wobei am Anschluss P1 der Pluspol und am Anschluss P2 der Minuspol der Gleichspannungsquelle G liegt. Da die Diode D das Fließen des Ausgangsstroms I_{G} nicht behindern darf, ist sie in dessen Flussrichtung gepolt, d.h. in Fig. 1 ist die Katode der Diode D mit dem Kollektor des Bipolar-Transistor T1 verbunden.

Ein zweiter Strompfad führt vom Anschluss P1 aus über die Diode D, die Emitter-Basis-Strecke des Bipolar-Transistors T1, einen ersten Widerstand R1, eine Kollektor-Emitter-Strecke eines zweiten Bipolar-Transistors T2, dessen Leitungstyp zum Leitungstyp des Bipolar-Transistors T1 komplementär ist, einen zweiten Widerstand R2 und den Strom-Messwiderstand Rm zum Anschluss P2.

Auch der zweite Strompfad ist geschlossen, wenn die Gleichspannungsquelle G mit den Anschlüssen P1, P2 und somit mit den Leitern L1, L2 verbunden ist, und es fließt dann im zweiten Strompfad ein Strom I_{B}. Der Strom I_{A} und der Strom I_{B} addieren sich zum eingangs erwähnten Ausgangsstrom I_{G}; dies ist aufgrund der in Fig. 1 eingezeichneten Strompfeile leicht zu erkennen.

Ferner enthält die gesteuerte Stromquelle einen Rückkopplungspfad für den Ausgangsstrom I_{G}, der vom Anschluss P2 über einen Rückkopplungswiderstand Rr zu einem nicht-invertierenden Eingang eines Operationsverstärkers OP führt. Diesem Eingang ist auch das Steuersignal zugeführt, das wie erwähnt den momentanen, vom Sensorsignal abhängigen Stromwert des Ausgangsstrom bestimmt. Ein Ausgang des Operationsverstärkers OP ist mit der Basis des Bipolar-Transistors T2 verbunden.

Aufgrund dieser Rückkopplung hat die gesteuerte Stromquelle die Eigenschaften einer geregelten Stromquelle, d.h. jeder vom Steuersignal - sozusagen erzwungene - Stromwert ist konstant-geregelt, so dass er von ihn beeinträchtigenden Einflüssen, insb. von Schwankungen der Leerlaufspannung der Gleichspannungsquelle, unabhängig ist.

Ferner ist ein Transistor T vorgesehen, der nach Einschalten der Gleichspannungsquelle G den Bipolar-Transistor T1 leitend steuert. Ein gesteuerter Strompfad des Transistors T ist der Emitter-Kollektor-Strecke des Bipolar-Transistors T2 parallelgeschaltet, und eine Steuerelektrode des Transistors T liegt an einem Abgriff eines einen Serienwiderstand Rs und einen ersten Kondensator C1 enthaltenden RC-Glieds. Der Serienwiderstand Rs ist mit dem Kollektor des Bipolar-Transistors T1 und der Kondensator C1 mit dem Schaltungsnullpunkt SN verbunden.

In Fig. 1 ist der Transistor T bevorzugt ein P-Kanal-Junction-Gate-Field-Effect-Transistor, dessen Drain-Anschluss mit dem Kollektor des Bipolar-Transistors T2 und dessen Source-Anschluss mit dem Schaltungsnullpunkt SN verbunden ist; dessen der Gate-Anschluss ist somit die genannte Steuerelektrode.

Das dem nicht-invertierenden Eingang des Operationsverstärkers OP zugeführte Steuersignal ist bevorzugt ein mittels eines zweiten Kondensators C2 geglättetes pulsbreitenmoduliertes Signal; das noch nicht geglättete Signal wird nach dem Einschalten der Gleichspannungsquelle G von einem Mikroprozessor MP aus dem Sensorsignal erzeugt; dieses stammt von einem physikalisch-elektrischen Sensorelement S, wie dies eingangs bereits erwähnt und erläutert wurde.

Im Schaltbild der Fig. 1 sind noch weitere Widerstände vorhanden, die zwar für die prinzipielle Funktionsweise nicht zwingend benötigt werden, sie jedoch unterstützen. Es handelt sich um einen dritten Widerstand R3, der bevorzugt in der Größenordnung von 100 kΩ liegt und der Emitter-Basis-Strecke des Bipolar-Transistors T1 parallelgeschaltet ist. Ein vierter Widerstand R4 verbindet den Drain-Anschluß von Transistor T mit dem Kollektor des Bipolar-Transistors T2 und ein fünfter Widerstand R5 den Gate-Anschluss von Transistor T mit dem Schaltungsnullpunkt SN.

Im Schaltbild der Fig. 1 sind ferner nicht mit Bezugszeichen versehene Widerstände vorhanden, deren Funktion dem Fachmann geläufig ist, so dass sie nicht näher erläutert zu werden brauchen. Ferner ist in Fig. 1 zu sehen, dass ein Ausgang des Spannungsreglers SR, der von üblicher Art sein kann und der daher lediglich als Block dargestellt ist, mit einem Eingang eines Gleichspannung/ Gleichspannung-Wandlers W verbunden ist. Dieser liefert eine zur Speisung des Mikroprozessors MP, des Operationsverstärkers OP und eventuell des Sensorelements S erforderliche Betriebsspannung ausreichender Höhe.

Die gesteuerte Stromquelle von Fig. 1 hat folgende Wirkungsweise: Es wird vorausgesetzt, dass vor dem Anlegen der Gleichspannungsquelle G an die Anschlüsse P1, P2 bzw. bei deren Einschalten, wenn sie fest daran angeschlossen ist, alle energie-speichernden Komponenten des Zwei-Leiter-Messgeräts entladen sind. Somit liegt vor dem Einschalten die Basis des Transistors T über den Widerstand R5 auf dem Potential des Schaltungsnullpunkts SN.

Nach dem Einschalten bleibt dieses Potential wegen des Kondensators C1 zunächst noch festgehalten, da dieser sich erst allmählich über den Widerstand Rs auflädt, und Transistor T ist somit noch leitend. Daher stellt sich über seinem gesteuerten Strompfad, also über der Drain-Source-Strecke, ein Spannungsabfall ein, der nur wenig größer als das Potential des Schaltungsnullpunkts SN ist. Somit liegt an der Serienschaltung der Widerstände R3, R1, R4 praktisch die Spannung der Gleichspannungsquelle G und die Basis des Bipolar-Transistors T1 auf einem gegenüber dem Potential seines Emitters so ausreichend negativen Potential, dass der Bipolar-Transistor T1 leitend gesteuert wird.

Der Kondensator C1 lädt sich nach dem Einschalten über den Widerstand Rs allmählich auf, so dass das Potential am Gate-Anschluss des Transistors T solange ansteigt, bis dieser gesperrt wird. Dieses Sperren ist zulässig, da er seine das Starten der gesteuerten Stromquelle bewirkende Funktion als Einschalt-Start-Schaltung erfüllt hat und diese nicht mehr benötigt wird. Somit fließt im Transistor T nur noch ein gegenüber dem Strom I_{B} vernachlässigbarer Leckstrom.

Nachdem der Bipolar-Transistor T1 leitend geworden ist und dies weiterhin bleibt, ist einerseits auch der Bipolar-Transistor T2 wegen des in seinem Emitterkreis liegenden Widerstands R2 so vorgespannt, dass er auf das Potential am Ausgang des Operationsverstärkers OP reagiert. Das Potential an der Basis des Bipolar-Transistors T1 stellt sich daher so ein, dass der dem momentanen Sensorsignal entsprechende Stromwert des Ausgangsstrom I_{G} erzeugt wird.

Andererseits ist wegen des leitenden Bipolar-Transistors T1 der erste Strompfad sozusagen freigeschaltet und der Strom I_{A} fließt, so dass der Spannungsregler SR, der Gleichspannung/Gleichspannung-Wandler W, der Mikroprozessor MP und gegebenenfalls das Sensorelement S mit Energie versorgt werden und funktionsfähig sind. Der Spannungsregler SR erzeugt eine Spannung von z.B. 10,5 V.

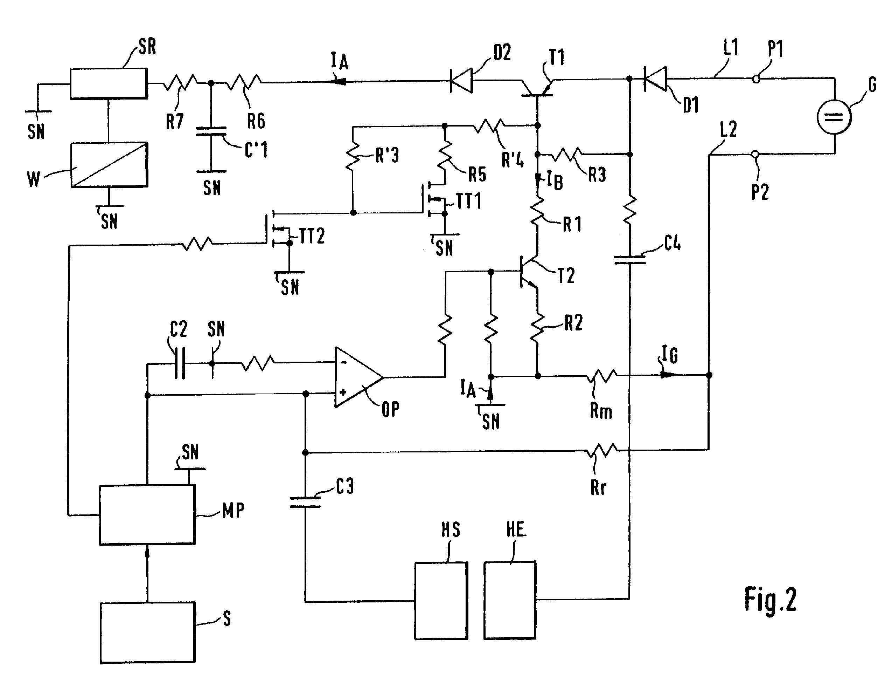

In Fig. 2 ist teilweise in der Form eines Blockschaltbilds die Schaltung einer gesteuerten Stromquelle eines Zwei-Leiter-Messgeräts entsprechend einer zweiten Variante der Erfindung dargestellt. In Fig. 2 haben Komponenten, die auch in Fig. 1 vorhanden sind, dann dieselben Bezugszeichen wie in Fig. 1, wenn die Komponenten in derselben Weise wie in Fig. 1 geschaltet sind. Wenn das nicht so ist, sind Bezugszeichen von Fig. 1 durch ein Zusatzsymbol (Apostroph, Stern etc.) abgewandelt.

Gegenüber der Variante von Fig. 1 ist die erfindungsgemäße Stromquelle so abgewandelt, dass auf den beiden Leitern L1, L2 das HART-Protokoll übertragen werden kann. Das HART-Protokoll (HART ist das Akronym für "Highway Addressable Remote Transducer", also für bus-addressierte Messgeräte) ist seit langern in der industriellen Messtechnik bekannt und eingeführt.

Das HART-Protokoll ermöglicht eine Kommunkation zwischen einer Feld- und einer Prozessleitebene mit dem Vorteil der gleichzeitigen Übertragbarkeit eines Analog-Messsignals nach dem 4-mA-bis-20-mA-Standard und des digitalen HART-Signals zur Bedienung, Inbetriebnahme, Instandhaltung, Abfrage oder Steuerung der Messgeräte in der Feldebene.

Während das Analog-Messsignal kontinuierlich verfügbar bleibt, erfolgt eine zyklische Abfrage und gegebenenfalls eine nachfolgende Anweisung durch die digitalen HART-Signale, wobei eine digitale Null durch zwei Sinusschwingungen der Frequenz 2,2 kHz und eine digitale Eins durch eine einzige Sinusschwingung der Frequenz 1,2 kHz entsprechend dem Standard Bell 202 Frequency Shift Keying realisiert ist. Diese Sinusschwingungen werden dem Ausgangsstrom I_{G} aufmoduliert.

Bei einer möglichen Verwendung der Schaltung von Fig. 1 zusammen mit dem HART-Protokoll und mit einem dem Kondensator C'1 von Fig. 2 entsprechenden Kondensator hat sich gezeigt, dass nicht garantiert werden kann, dass der Junction-Gate-Field-Effect-Transistor T nach dem Einschalten vollständig gesperrt ist, weil dessen Gate-Source-Spannung nicht genügend positiv gemacht werden kann (in der Praxis z.B. nicht höher als 3 V bei einer lt. Datenblatt des verwendeten Transistortyps für das Sperren erforderlichen Gate-Source-Schwellspannung von 2,8 V).

Das hat zur Folge, dass sich durch den Transistor T ein kleiner Leckstrom ergibt, der bei Nichtanwendung des HART-Protokolls die erwähnte Stromregelung nicht stört, bei Verwendung des HART-Protokoll jedoch bewirken kann, dass die Kommunikation zwischen Feldebene und Prozessleitebene unterbrochen wird, da die Auf- und Entladung des dem Kondensator C'1 entsprechenden Kondensators gestört ist.

Dieser mögliche Nachteil von Fig. 1 wird mit der erfindungsgemäßen Stromquelle nach Fig. 2 beseitigt, die daher gegenüber der Variante nach Fig. 1 wie folgt modifiziert ist:

In Fig. 2 verläuft der erste Strompfad vom Anschluss P1 über eine erste Diode D1, die Emitter-Kollektor-Strecke des Bipolar-Transistors Tl, den am zum Zwei-Leiter-Messgerät gehörenden Schaltungsnullpunkt SN liegenden Spannungsregler SR und den am Schaltungsnullpunkt SN liegenden Strom-Messwiderstand Rm zum zweiten Anschluss P2 der Gleichspannungsquelle G führt. Der Emitter-Kollektor-Strecke des Bipolar-Transistors T1 ist wieder der Widerstand R3 parallelgeschaltet. Auch in Fig. 2 ist der erste Strompfad, wenn die Gleichspannungsquelle G mit den Anschlüssen P1, P2 und somit mit den Leitern L1, L2 verbunden ist, geschlossen, und es fließt dann im ersten Strompfad der Strom I_{A}.

Der zweite Strompfad führt vom ersten Anschluss P1 über die Diode D, die Emitter-Basis-Strecke des Bipolar-Transistors T1, den Widerstand R1, die Kollektor-Emitter-Strecke des Bipolar-Transistors T2, dessen Leitungstyp zum Leitungstyp des Bipolar-Transistors T1 wieder komplementär ist, den Widerstand R2 und den Strom-Messwiderstand Rm zum Anschluss P2. Somit fließt wieder der Strom I_{B} der sich zum Strom I_{A} addiert, so dass der Ausgangsstrom I_{G} gebildet wird.

Auch in Fig. 2 ist der Bipolar-Transistor T1 ein pnp-Transistor und der Bipolar-Transistor T2 ein npn-Transistor, wobei am Anschluss P1 der Pluspol und am Anschluss P2 der Minuspol der Gleichspannungsquelle G liegt.

Der Kollektor des Bipolar-Transistors T1 und somit auch der Eingang des Spannungsreglers SR sind mit einem ersten Anschluss eines ersten Kondensators C'1 gekoppelt, dessen zweiter Anschluss am Schaltungsnullpunkt SN liegt. Wenn das Zwei-Leiter-Messgerät, wie bei der Schaltungsanordnung von Fig. 1 vorausgesetzt wird, Explosionsschutz-Standards einhält, erfolgt die Ankopplung des Kondensators C'1 unter Einfügung zweier niederohmiger Widerstände R6, R7 (bevorzugt ca. 50 Ω), so dass sich zusammen mit dem Kondensator C'1 das dargestellte T-Glied ergibt. Die beiden Widerstände R6, R7 verhindern, dass bei einem Bruch einer Leitung im Messgerät ein Zündfunke entsteht.

Ferner enthält die gesteuerte Stromquelle der Fig. 2 wieder den Rückkopplungspfad für den Ausgangsstrom I_{G}, der vom Anschluss P2 über de Rückkopplungswiderstand Rr zum nicht-invertierenden Eingang des Operationsverstärkers OP führt. Diesem Eingang ist auch das Steuersignal zugeführt, das wie erwähnt den momentanen, vom Sensorsignal abhängigen Stromwert des Ausgangsstroms I_{G} bestimmt. Ein Ausgang des Operationsverstärkers OP ist mit der Basis des Bipolar-Transistors T2 verbunden. Aufgrund dieser Rückkopplung hat die gesteuerte Stromquelle wieder die erläuterten Eigenschaften einer geregelten Stromquelle.

Ferner ist ein erster Transistor TT1 vorgesehen, der nach Einschalten der Gleichspannungsquelle G den Bipolar-Transistor T1 leitend steuert und dem an einer Steuerelektrode durch das Einschalten ein Startsignal zugeführt wird. Ferner ist ein nach Ablauf der Startphase den ersten Transistor TT1 nicht-leitend steuernder zweiter Transistor TT2 vorhanden, dem an einer Steuerelektrode nach Ablauf der Startphase ein Stoppsignal zugeführt wird; dieses liefert der Mikroprozessor MP.

In Fig. 2 sind die Transistoren TT1, TT2 bevorzugt N-Kanal-Enhancement-Insulated-Gate-Field-Effect-Transistoren mit jeweils einem Drain-, einem Source- und einem Gate-Anschluss. Der Gate-Anschluss des Transistors TT1 ist über einen zu einem dritten Widerstand R'3 in Serie liegenden vierten Widerstand R'4 mit der Basis des Bipolar-Transistors T1 verbunden.

Der Drain-Anschluss des Transistors TT1 ist über einen zum Widerstand R'4 in Serie liegenden fünften Widerstand R5 mit der Basis des Bipolar-Transistors T1 verbunden und der Source-Anschluss des ersten Transistors TT1 mit dem Schaltungsnullpunkt SN.

Der Drain-Anschluss des Transistors TT2 ist mit dem Gate-Anschluss des Transistor TT1, der Source-Anschluss des Transistors TT2 mit dem Schaltungsnullpunkt SN und der Gate-Anschluss des Transistors TT2 mit dem das Steuersignal abgebenden Ausgang des Mikroprozessors MP verbunden.

In Fig. 2 ist das dem nicht-invertierenden Eingang des Operationsverstärkers OP zugeführte Steuersignal wieder bevorzugt ein mittels des Kondensators C2 geglättetes pulsbreitenmoduliertes Signal, das nach dem Einschalten der Gleichspannungsquelle G vom Mikroprozessor MP aus dem Sensorsignal vor dem Glätten erzeugt wird; dieses stammt wieder vom physikalisch-elektrischen Sensorelement S.

Damit die geregelte Stromquelle auch im Stande ist, das HART-Protokoll zu generieren bzw. zu verarbeiten, sind nun zu erläutertende Teilschaltungen vorgesehen. Ein Ausgang einer HART-Protokoll-Sendestufe HS ist über einen dritten Kondensator C3 mit dem nicht-invertierenden Eingang des Operationsverstärkers OP kapazitiv gekoppelt, die ein nach außerhalb des Zwei-Leiter-Messgeräts zu sendendes erstes HART-Protokoll-Signal dem Gesamtstrom I_{G} aufmoduliert. Mit dem Emitter des Bipolar-Transistors T1 ist ein Eingang einer HART-Protokoll-Empfangsstufe HE kapazitiv über einen vierten Kondensator C4 gekoppelt, mit der ein dem Gesamtstrom I_{G} außerhalb des Zwei-Leiter-Messgeräts aufmoduliertes, von diesem zu empfangendes zweites HART-Protokoll-Signal demoduliert wird. Derartige Sende- Bzw. Empfangsstufen sind seit langem üblich, so dass sie hier nicht näher erläutert zu werden brauchen.

Der Kondensator C'1 dient wie erwähnt zum Ausgleich der infolge der HART-Protokoll-Signale entstehenden Schwankungen der Energieversorgung. Der Kondensator C'1 lädt sich während positiven Halbwellen dieser Signale auf und entlädt sich während deren negativen Halbwellen über den Spannungsregler SR; somit wird deren Energieversorgung auch während diesen negativen Teilen aufrecht erhalten.

Zwischen dem Kollektor des Bipolar-Transistors T1 und dem Spannungsregler SR ist bevorzugt eine zweite Diode D2 eingefügt, deren Flussrichtung wie die der Diode D1 gleich der Stromrichtung des Stromes I_{A} ist; in Fig. 2 ist somit die Anode der Diode D2 mit dem Kollektor des Bipolar-Transistors T1 verbunden. Die Diode D2 verhindert eine mögliche Entladung des Kondensators C'1 über die Kollektor-Basis-Strecke des Bipolar-Transistors T1 nach einem Abschalten der Gleichspannungsquelle G, so dass der Mikroprozessor MP danach noch eine Zeit lang funktionsfähig bleibt und z.B. noch erforderliche Routinen, insb. eine Totalisatorfunktion, ausführen kann.

Auch im Schaltbild der Fig. 2 sind nicht mit Bezugszeichen versehene Widerstände vorhanden, deren Funktion dem Fachmann geläufig ist, so dass sie nicht näher erläutert zu werden brauchen. Wie in Fig. 1 ist in Fig. 2 ein Ausgang des Spannungsreglers SR, der auch hier von üblicher Art ist, mit dem Eingang des Gleichspannung/Gleichspannung-Wandlers W verbunden.

Die gesteuerte Stromquelle von Fig. 2 hat folgende Wirkungsweise: Es wird wieder vorausgesetzt, dass vor dem Anlegen der Gleichspannungsquelle G an die Anschlüsse P1, P2 bzw. bei deren Einschalten, wenn sie fest daran angeschlossen ist, alle energie-speichernden Komponenten des Zwei-Leiter-Messgeräts entladen sind.

Nach dem Einschalten baut sich über die Widerstände R3', R4' am Gate-Anschluss des Transistor TT1 eine Spannung auf, da Transistor TT2 gesperrt ist und somit seine Drain-Spannung etwa gleich dem Potential am Anschluss P1 ist; in Fig. 2 ist dieses Potential also stark positiv. Das Potential am Gate-Anschluss von Transistor TT2 ist nämlich noch gleich dem des Schaltungsnullpunkts SN, da der Mikroprozessor MP erst aktiv sein kann, wenn der Spannungsregler SR aktiv geworden ist.

Sobald die Spannung am Gate-Anschluss des Transistor TT1 zu dessen Leitend-Steuern ausreicht, ergibt sich ein Strompfad vom Anschluss P1 über die Emitter-Basis-Strecke des npn-Bipolar-Transistors T1, die Widerstände R'4, R'3 und die Drain-Source-Strecke des Transistors TT1 zum Schaltungsnullpunkt SN. Dadurch wird das Potential an der Basis des Bipolar-Transistor T1 gegenüber dem Potential an dessen Emitter so ausreichend negativ, dass er ebenfalls leitend wird. Somit ist auch der erste Strompfad eröffnet, der Strom I_{A} fließt und Spannungsregler SR sowie Mikroprozessor MP beginnen zu arbeiten.

Damit erzeugt der Mikroprozessor MP am mit dem Gate-Anschluss des Transistors TT2 verbundenen Ausgang das erwähnte Stoppsignal, das während des Betriebs des Zwei-Leiter-Messgeräts beim Ausführungsbeispiel der Fig. 2 dauernd derart positiv ist, dass Transistors TT2 dauernd leitend gesteuert ist. Dadurch wird der Transistors TT1 dauernd gesperrt, so dass über den von ihm gebildeten, zum zweiten Strompfad parallelen Strompfad nur noch, wenn überhaupt, ein gegenüber dem Strom I_{B} vernachlässigbarer Strom fließt. Somit fließen im Zwei-Leiter-Messgerät nur die Ströme I_{A}, I_{B}.

Das oben erwähnte HART-Signal, das im Falle der Erfindung ja eine Strommodulation darstellt, kann Stromwerte von maximal ± 600 *µ*A annehmen. Das bedeutet im ungünstigsten Fall, wenn der Ausgangstrom I_{G} 4 mA beträgt, dass für die Energieversorgung lediglich (4 ± 0,6) mA = (3,4 bis 4,6) mA zur Verfügung stehen. Die erwähnte Auswerte-Elektronik ist so konzipiert, dass der von ihr benötigte Strom, nämlich der Strom I_{A}, maximal 3,9 mA beträgt. Somit reichen die beim Senden oder Empfangen von HART-Signalen während deren negativen Halbperioden nur vorhandenen 3,4 mA nicht aus, so dass die Kommunikation über das HART-Protokoll unterbrochen werden könnte.

Zur Behebung dieses Nachteils dient der Kondensator C'1, der sich während den positiven Halbperioden der HART-Signale, also wenn 4,6 mA zur Verfügung stehen, auflädt und so die fehlende Energie während den negativen Halbperioden liefert, wenn eigentlich nur 3,4 mA zur Verfügung stehen. Die Kommunikation über das HART-Signal kann daher ohne Unterbrechung und perfekt funktionieren.

Dass der Strom I_{B}, der den Bipolar-Transistor T1 leitend steuert, wie beschrieben über die Widerstände R'4 und R5, die Drain-Source-Strecke des Transistors TT1, den Schaltungsnullpunkt SN und über den Strom-Messwiderstand Rm zum Anschluss P2 fließt, verhindert, dass der Operationsverstärker OP, der in Fig. 2 von einer vom Gleichspannung/Gleichspannung-Wandler W stammenden positiven Spannung versorgt wird, eine so hohe negative Spannung erhält, dass er dadurch blockiert wird, also in einen sogenannten "Latch-up-Mode" gesteuert wird, was immer zu vermeiden ist.

Die Rückkopplung über den Rückkopplungswiderstand Rr auf den nicht-invertierenden Eingang des Operationsverstärkers OP ist eine Gegenkopplung, deren Wirkung im Betrieb durch die geglättete pulsbreitenmodulierte Spannung mehr oder weniger kompensiert wird.

Beim Einschalten der Gleichspannungsquelle G ist aber diese Spannung noch nicht vorhanden und die Spannung am nicht-invertierenden Eingang des Operationsverstärkers OP würde ohne die Transistoren TT1, TT2 und deren Beschaltung so negativ sein, dass er in den "Latch-up-Mode" gesteuert würde. Dies deswegen, weil der Operationsverstärker OP nicht mit einer gegenüber dem Schaltungsnullpunkt SN symmetrischen Spannung, also mit einer positiven und mit einer negativen Spannung, gespeist wird, sondern nur mit einer positiven Spannung.

Im "Latch-up-Mode" wäre der Operationsverstärkers OP stark übersteuert und dadurch der Bipolar-Transistor T2 gesättigt, so dass das Zwei-Leiter-Messgerät nicht starten könnte; der Strom I_{A} betrüge zwischen 22 mA und 60 mA.

Wenn dagegen der Strom I_{A}, der den Bipolar-Transistor T1 leitend macht, beim Einschalten über die Widerstände R'4, R5, die Drain-Source-Strecke des Transistors TT1 zum Schaltungsnullpunkt SN und dann über den Strom-Messwiderstand Rm zum Anschluss P2 fließt, beträgt der Start-Strom, also der Strom kurz nach dem Einschalten der Gleichspannungsquelle G, maximal 41 *µ*A bis 108 *µ*A. Der aktuelle Start-Stromwert ist vom aktuellen Spannungswert der Gleichspannungsquelle G und dem jeweiligen Spannungsabfall an der Diode D1, an der Emitter-Basis-Diode des Bipolar-Transistors T1 und an den Widerständen R'3, R'4 und Rm abhängig.

Dies bedeutet, dass die negative Spannung, die über den Rückkopplungswiderstand Rr auf den nicht-invertierenden Eingang des Operationsverstärkers OP zurückgekoppelt wird, zwischen -1,8 mV und -4,7 mV beträgt. Solche Werte reichen aber nicht aus, übliche Operationsverstärker in den "Latch-up-mode" zu steuern.

## Patentansprüche

1. Gesteuerte Stromquelle eines Zwei-Leiter-Meßgeräts, die als Meßsignal einen zwischen 4 mA und 20 mA liegenden Ausgangsstrom (IG) erzeugt und die von einem mittels eines physikalisch-elektrischen Sensorelements (S) erzeugten Steuersignals gesteuert ist,
- mit einem ersten Strompfad, der von einem ersten Anschluß (P1) einer von außerhalb anzuschaltenden Gleichspannungsquelle (G) über eine Diode (D1), eine Emitter-Kollektor-Strecke eines ersten Bipolar-Transistors (T1), einen an einem zum Zwei-Leiter-Meßgerät gehörenden Schaltungsnullpunkt (SN) liegenden Spannungsregler (SR) und einen am Schaltungsnullpunkt liegenden Strom-Meßwiderstand (Rm) zu einem zweiten Anschluß (P2) der Gleichspannungsquelle führt,
- mit einem zweiten Strompfad, der vom ersten Anschluß (P1) über die Diode (D), die Emitter-Basis-Strecke des ersten Bipolar-Transistors (T1), einen ersten Widerstand (R1), eine Kollektor-Emitter-Strecke eines zweiten Bipolar-Transistors (T2), dessen Leitungstyp zum Leitungstyp des ersten Bipolar-Transistors komplementär ist, einen zweiten Widerstand (R2) und den Strom-Meßwiderstand (Rm) zum zweiten Anschluß (P2) führt, wobei der im ersten Strompfad fließende Strom (IA) der im zweiten Strompfad fließende Strom (IB) sich zum Ausgangsstrom (IG) addieren,
- mit einem Rückkopplungspfad für den Ausgangsstrom, der vom zweiten Anschluß (P2) über einen Rückkopplungswiderstand (Rr) zu einem nicht-invertierenden Eingang eines Operationsverstärkers (OP) führt, wobei dem Eingang auch das Steuersignal zugeführt ist und wobei ein Ausgang des Operationsverstärkers (OP) mit der Basis des zweiten Bipolar-Transistors (T1) verbunden ist,
- mit einem nach Einschalten der Gleichspannungsquelle (G) den ersten Bipolar-Transistor (T1) leitend steuernden ersten Transistor (TT1), dem an einer Steuerelektrode durch das Einschalten ein Startsignal zugeführt ist, und
- mit einem nach Ablauf der Startphase den ersten Transistor nicht-leitend steuernden zweiten Transistor (TT2), dem an einer Steuerelektrode nach Ablauf der Startphase ein Stoppsignal zugeführt ist.

2. Gesteuerte Stromquelle nach dem vorherigen Anspruch, bei der der erste Bipolar-Transistor (T1) ein pnp-Transistor und der zweite Bipolar-Transistor (T2) ein npn-Transistor ist.

3. Gesteuerte Stromquelle nach dem vorherigen Anspruch, bei der
- der erste und der zweite Transistor (TT1, TT2) N-Kanal-Enhancement-Insulated-Gate-Field-Effect-Transistoren mit jeweils einem Drain-, einem Source- und einem Gate-Anschluß verbunden sind,
- der Gate-Anschluß des ersten Transistors (TT1) über einen zu einem dritten Widerstand (R'3) in Serie liegenden vierten Widerstand (R'4) mit der Basis des ersten Bipolar-Transistors (T1) verbunden ist,
- der Drain-Anschluß des ersten Transistors (TT1) über einen zum vierten Widerstand (R'4) in Serie liegenden fünften Widerstand (R5) mit der Basis des ersten Bipolar-Transistors (T1) verbunden ist,
- der Source-Anschluß des ersten Transistors (TT1) mit dem Schaltungsnullpunkt (SN) verbunden ist,
- der Drain-Anschluß des zweiten Transistors (TT2) mit dem Cate-Anschluß des ersten Transistor (TT1) verbunden ist,
- der Source-Anschluß des zweiten Transistors (TT2) mit dem Schaltungsnullpunkt (SN) verbunden ist und
- der Gate-Anschluß des zweiten Transistors (TT2) mit einem das Stoppsignal abgebenden Ausgang eines Mikroprozessors (MP) verbunden ist.

4. Gesteuerte Stromquelle nach einem der vorherigen Ansprüche, bei der das dem Operationsverstärker (OP) zugeführte Steuersignal ein pulsbreitenmoduliertes Signal ist, das von einem Mikroprozessor (MP) aus dem Sensorsignal erzeugt und das geglättet wird.

5. Gesteuerte Stromquelle nach einem der vorherigen Ansprüche, bei der
- mit dem nicht-invertierenden Eingang des Operationsverstärkers (OP) ein Ausgang einer HART-Protokoll-Sendestufe (HS) kapazitiv gekoppelt ist, mit der dem Ausgangsstrom (IG) ein nach ausserhalb des Zwei-Leiter-Messgeräts zu sendendes erstes HART-Protokoll-Signal aufmoduliert wird,
- mit dem Emitter des ersten Bipolar-Transistors (T1) ein Eingang einer HART-Protokoll-Empfangsstufe (HE) kapazitiv gekoppelt ist, mit der ein dem Ausgangsstrom (IG) ausserhalb des Zwei-Leiter-Messgeräts aufmoduliertes, von diesem zu empfangendes HART-Protokoll-Signal demoduliert wird, und der Kollektor des ersten Bipolar-Transistors (T1) mit einem ersten Anschluß eines Kondensators (C'1) gekoppelt ist, dessen zweiter Anschluß am Schaltungsnullpunkt (SN) liegt.

6. Gesteuerte Stromquelle nach dem vorherigen Anspruch, bei der zwischen dem Kollektor des ersten Bipolar-Transistors (T1) und dem Spannungsregler (SR) eine zweite Diode (D2) eingefügt ist.

## Claims

1. Controlled current source of a two-wire measuring device that generates an output current (IG) between 4 mA and 20 mA as the measuring signal, and is controlled by a control signal that is generated by a physical-to-electrical sensor element (S). This controlled current source comprises:
- a first current path which runs from a first terminal (P1) of a D.C. voltage source (G), to be switched on from the outside, to a second terminal (P2) of the D.C. voltage source by means of a diode (D1), an emitter/collector path of a first bipolar transistor (T1), a voltage regulator (SR) at a circuit neutral point (SN) of the two-wire measuring device and a current measuring resistor (Rm) at the circuit neutral point.
- a second current path which runs from the first terminal (P1) to the second terminal (P2) by means of the diode (D), the emitter/base path of the first bipolar transistor (T1), a first resistor (R1), a collector/emitter path of a second bipolar transistor (T2) whose conductivity type is complementary to the conductivity type of the first bipolar transistor, a second resistor (R2) and the current measuring resistor (Rm), where the current (IA) in the first current path and the current (IB) in the second current path are added to form the output current (IG)
- a feedback path for the output current which goes from the second terminal (P2) to a noninverting input of an operational amplifier (OP) via a feedback resistor (Rr), where the control signal is also supplied to the input and where an output of the operational amplifier (OP) is connected to the base of the second bipolar transistor (T1)
- a first transistor (TT1) which renders the first bipolar transistor (T1) conductive when the D.C. voltage source (G) is switched on, whereby a start signal is supplied to said first transistor (TT1) at a control electrode as a result of the switch-on process
- a second transistor (TT2) which renders the first transistor nonconductive on completion of the start phase, whereby a stop signal is supplied to said second transistor (TT2) at a control electrode on completion of the start phase.

2. Controlled current source as per the previous claim, where the first bipolar transistor (T1) is a pnp transistor and the second bipolar transistor (T2) is an npn transistor.

3. Controlled current source as per the previous claim, **characterized in that:**
- the first and second transistors (TT1, TT2) are N-channel enhancement insulated gate field effect transistors, each being connected to a drain, source and gate terminal
- the gate terminal of the first transistor (TT1) is connected to the base of the first bipolar transistor (T1) through a fourth resistor (R'4) in series with a third resistor (R'3)
- the drain terminal of the first transistor (TT1) is connected to the base of the first bipolar transistor (T1) through a fifth resistor (R5) in series with a fourth resistor (R'4)
- the source terminal of the first transistor (TT1) is connected to the circuit neutral point (SN)
- the drain terminal of the second transistor (TT2) is connected to the gate terminal of the first transistor (TT1)
- the source terminal of the second transistor (TT2) is connected to the circuit neutral point (SN)
- the gate terminal of the second transistor (TT2) is connected to an output of a microprocessor (MP) issuing the stop signal

4. Controlled current source as per one of the previous claims where the control signal supplied to the operational amplifier (OP) is a pulse-width modulated signal, which is generated from the sensor signal by a microprocessor (MP) and is smoothened.

5. Controlled current source as per one of the previous claims, **characterized in that**
- an output of a HART protocol transmitting stage (HS) is coupled, in a capacitive manner, to the noninverting input of the operational amplifier (OP), whereby said HART protocol transmitting stage is used to modulate a first HART protocol signal, to be sent outside the two-wire measuring device, for the output current
- an input of a HART protocol receiving stage (HE) is coupled, in a capacitive manner, with the emitter of the first bipolar transistor (T1). The HART protocol signal is demodulated with this receiving stage, whereby this signal is modulated for the output current (IG) outside the two-wire measuring device and has to be received by the measuring device. The collector of the first bipolar transistor (T1) is coupled to a first terminal of a capacitor (C'1) whose second terminal is connected to the circuit neutral point (SN).

6. Controlled current source as per the previous claim, where a second diode (D2) is integrated between the collector of the first bipolar transistor (T1) and the voltage regulator (SR).

## Revendications

1. Source de courant commandée d'un appareil de mesure à deux fils, qui génère un courant de sortie (IG) entre 4 et 20 mA, et qui est commandée au moyen d'un signal de commande généré par un élément de capteur (S) physique-électrique,
- avec un premier circuit, qui part d'un premier point de connexion (P1) d'une source de tension continue (G) activable de l'extérieur, en passant par une diode (D1), une jonction émetteur-collecteur d'un premier transistor bipolaire (T1), un régulateur de tension (SR) relié à la masse du circuit (SN), appartenant à l'appareil de mesure à deux fils, et une résistance de mesure de courant (Rm) reliée à la masse du circuit (SN) conduisant à un deuxième point de connexion (P2) de la source de tension continue,
- avec un deuxième circuit, qui part du premier point de connexion (P1) à travers la diode (D), la jonction émetteur-base du premier transistor bipolaire (T1), une première résistance (R1), une jonction collecteur-émetteur d'un deuxième transistor bipolaire (T2), dont le type de commutation est complémentaire au type de commutation du premier transistor bipolaire, une deuxième résistance (R2) et la résistance de mesure de courant (Rm) conduisant à un deuxième point de connexion (P2), le courant (IA) circulant dans le premier circuit et le courant (IB) circulant dans le deuxième circuit s'ajoutant pour former le courant de sortie (IG),
- avec un circuit de rétroaction pour le courant de sortie, qui part du deuxième point de connexion (P2) à travers une résistance de rétroaction (Rr) vers une entrée non inverseuse d'un amplificateur opérationnel (OP), le signal de commande étant également acheminé à l'entrée, et la sortie de l'amplificateur opérationnel (OP) étant reliée à la base du deuxième transistor bipolaire (T1),
- avec un premier transistor (TT1) commutant à l'état passant le transistor (T1) après l'activation de la source de tension continue (G), auquel transistor (TT1) est acheminé à une électrode de commande un signal de démarrage après l'activation, et
- avec un deuxième transistor (TT2) commutant à l'état bloqué le premier transistor au terme de la phase de démarrage, auquel transistor (TT2) est acheminé à une électrode de commande un signal d'arrêt au terme de la phase de démarrage.

2. Source de courant commandée selon la revendication précédente, pour laquelle le premier transistor bipolaire (T1) et un transistor PNP et le deuxième transistor bipolaire (T2) est un transistor NPN.

3. Source de courant commandée selon la revendication précédente, pour laquelle
- le premier et le deuxième transistor (TT1, TT2) sont des transistors à effet de champ à grille isolée à enrichissement canal N, qui sont chacun reliés à une connexion de drain, de source et de grille,
- la connexion de grille du premier transistor (TT1) étant reliée à la base du premier transistor bipolaire (T1) à travers une quatrième résistance (R'4) branchée en série avec une troisième résistance (R'3),
- la connexion de drain du premier transistor (TT1) étant reliée à la base du premier transistor bipolaire (T1) à travers une cinquième résistance (R5) branchée en série avec une quatrième résistance (R'4),
- la connexion de source du premier transistor (TT1) étant reliée à la masse du circuit (SN),
- la connexion de drain du deuxième transistor (TT2) étant reliée à la connexion de grille du premier transistor (TT1),
- la connexion de source du deuxième transistor (TT2) étant reliée à la masse du circuit (SN) et
- la connexion de grille du deuxième transistor (TT2) étant reliée à une sortie d'un microprocesseur (MP), délivrant le signal d'arrêt.

4. Source de courant commandée selon l'une des revendications précédentes, pour laquelle le signal de commande acheminé à l'amplificateur opérationnel (OP) est un signal modulé en largeur d'impulsions, qui est généré et lissé par un microprocesseur (MP) à partir du signal du capteur.

5. Source de courant commandée selon l'une des revendications précédentes, pour laquelle
- une sortie d'un étage d'émission (HS) à protocole HART est couplée de façon capacitive à l'entrée non inverseuse de l'amplificateur opérationnel (OP), étage avec lequel un premier signal de protocole HART à émettre à l'extérieur de l'appareil de mesure à deux fils est modulé au courant de sortie (IG),
- une entrée d'un étage de réception (HE) à protocole HART est couplée de façon capacitive à l'émetteur du premier transistor bipolaire (T1), étage avec lequel un signal de protocole HART, modulé au courant de sortie (IG) à l'extérieur de l'appareil à deux fils, est démodulé en un signal de protocole HART à recevoir par l'appareil, et le collecteur du premier transistor bipolaire (T1) est couplé à la première connexion d'un condensateur (C'1), dont la deuxième connexion est reliée à la masse du circuit (SN).

6. Source de courant commandée selon la revendication précédente, pour laquelle une deuxième diode (D2) est intercalée entre le collecteur du premier transistor bipolaire (T1) et le régulateur de tension (SR).
